(19) Europäisches Patentamt
European Patent Office
Office européen des brevets

(11) **EP 2 181 790 B1**

(12) **EUROPÄISCHE PATENTSCHRIFT**

(45) Veröffentlichungstag und Bekanntmachung des Hinweises auf die Patenterteilung:
**20.07.2011 Patentblatt 2011/29**

(21) Anmeldenummer: **09159654.4**

(22) Anmeldetag: **07.05.2009**

(51) Int Cl.:
*B23F 21/22* (2006.01)     *B23F 9/10* (2006.01)
*B23C 5/06* (2006.01)      *B23F 5/20* (2006.01)

(54) **Verfahren zum Erzeugen von Kegelrädern mit Hypozykloidverzahnung im kontinuierlichen Teilverfahren unter Verwendung eines entsprechenden Stirnmesserkopfes**

Method for producing bevel gears with hypocycloid toothing by face milling using a corresponding face mill cutter

Procédé de production de roues coniques dotées d'une dentelure hypocycloïde dans le procédé partiel continu en utilisant une tête de mesure frontale correspondante

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **30.10.2008 EP 08167925**

(43) Veröffentlichungstag der Anmeldung:
**05.05.2010 Patentblatt 2010/18**

(73) Patentinhaber: **Klingelnberg AG**
**8023 Zürich (CH)**

(72) Erfinder:
• **Müller, Hartmuth, Dr.**
**42857 Remscheid (DE)**
• **Hünecke, Carsten, Dr.**
**31787 Hameln (DE)**

(74) Vertreter: **OK pat AG**
**Chamerstrasse 50**
**6300 Zug (CH)**

(56) Entgegenhaltungen:
**EP-A2- 1 348 509      WO-A1-2007/090871**
**US-A1- 2001 028 831**

**Beschreibung**

Die vorliegende Erfindung betrifft Verfahren zum Erzeugen von Kegelrädern mit Hypozykloidverzahnung im kontinuierlichen Teilverfahren und die Verwendung entsprechender Stirnmesserköpfe.

Die vorliegende Anmeldung beansprucht die Priorität der europäischen Patentanmeldung EP 08 167 925.0, die am 30.10.2008 eingereicht wurde.

Stand der Technik

Es gibt verschiedene Typen von Kegelrädern, wobei man diese Typen unter anderem anhand des Verlaufs der Flankenlängslinien unterscheidet. Nach dem Verlauf der Flankenlängslinien werden folgende Kegelräder unterschieden:

- geradverzahnte Kegelräder
- schrägverzahnte Kegelräder
- spiralverzahnte Kegelräder.

Eine Kegelradpaarverzahnung kann durch die zugehörige virtuelle Planradverzahnung eindeutig festgelegt werden (wenn die Teilkegelwinkel bekannt sind). Das entsprechende Planrad kann man sich als hauchdünne Profilscheibe vorstellen. Das Planrad entsteht aus der Kegelradverzahnung dadurch, dass der Teilkegelwinkel auf $\delta_p$= 90° gesetzt wird. Im Allgemeinen hat jeder Normalschnitt durch einen Planradzahn gerade Flanken. Kegelräder einer Kegelradpaarung besitzen die gleiche Planradzähnezahl.

Der Begriff "spiralverzahnte Kegelräder" wurde vermutlich aus dem amerikanischen Raum übernommen, wo diese Kegelräder generell als "spiral bevel gears" bezeichnet werden. Besser wäre es hier den Oberbegriff "bogenverzahnte Kegelräder" statt "spiralverzahnte Kegelräder" zu verwenden, da die Spirale bereits eine Spezialform einer Kurve (z.B. die archimedische) darstellt. Im Folgenden wird aber weiterhin die Bezeichnung "spiralverzahnte Kegelräder" verwendet, wie es sich In der Praxis eingebürgert hat.

Bei spiralverzahnten Kegelrädern ist eine weitere Unterteilung im Hinblick auf die Form der Flankenlängslinie möglich:

- Kreisbogen
- Epizykloide, insbesondere verlängerte Epizykloide
- Evolvente
- Hypozykloide, insbesondere verlängerte Hypozykloide.

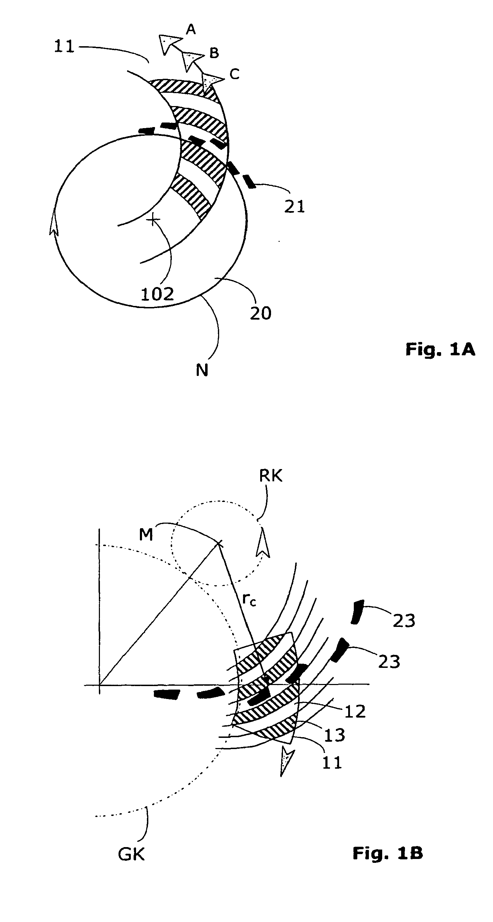

Kreisbogen-verzahnte Kegelräder haben einen Kreisbogen als Flankenlängslinie. Kreisbogen-verzahnte Kegelräder werden im Einzetteilverfahren (auch intermittierendes Teilverfahren, intermitted indexing process, single indexing process oder face milling genannt) gefertigt. Das Einzelteilverfahren ist in Fig. 1A schematisch dargestellt. Die Messer 21 eines Messerkopfs 20 vollziehen eine kreisförmige Bewegung, während das zu erzeugende Kegelrad 11 in einer festen Winkelposition ruht. Zum Fertigen weiterer Zahnlücken wird der Messerkopf 20 zurück gezogen und das Werkstück 11 um einen Teilungswinkel gedreht. Das schrittweise Weiterdrehen (hier im Gegenuhrzeigersinn) ist in Fig. 1A durch die Pfelle A, B und C angedeutet. Es wird somit immer eine Zahnlücke 22 auf einmal gefertigt.

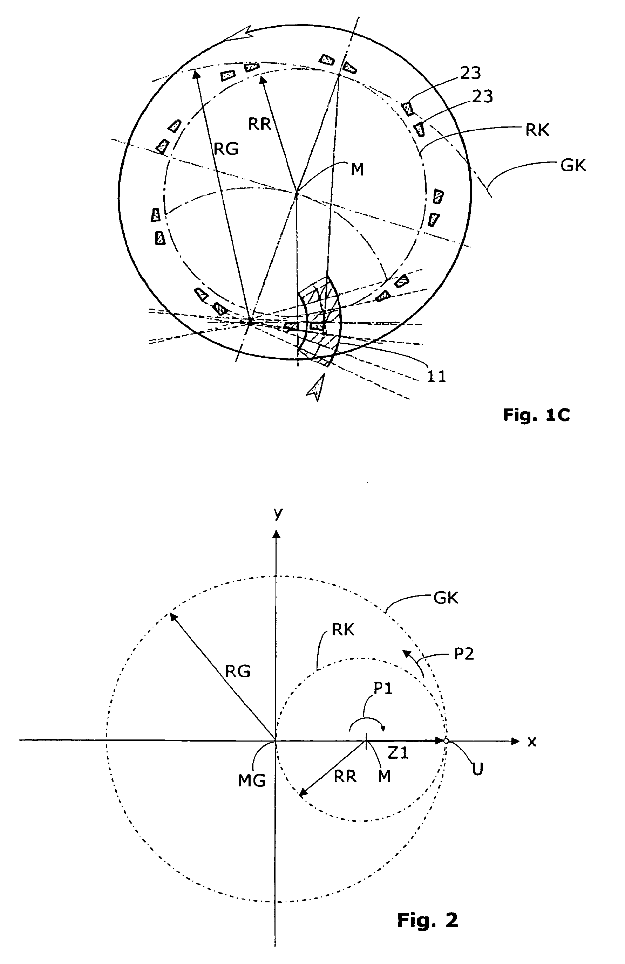

Epizykloidisch, insbesondere erweitert-epizykloidisch (auch verlängertepizykloidisch genannt), verzahnte Kegelräder werden durch ein kontinuierliches Teilverfahren (auch kontinuierliches Wälzfräsen, continuous indexing process, oder face hobbing genannt) gefertigt. Bei der Erzeugung der Epizykloide im kontinuierlichen Teilverfahren entspricht das Verhältnis von der Planradzähnezahl $z_p$ des Kegelrads zur der Gangzahl $G_x$ des Stabmesserkopfes (Anzahl der Messergruppen) dem Verhältnis des Radius RG des Grundkreises GK zu dem Radius RR des Rollkreises RK. Man spricht von einer verlängerten Epizykloide, wenn der Messerkopfnennradius $r_c$, auf dem die Schneiden der Messer 23 sitzen, größer als der Radius RR des Rollkreises RK ist (siehe Fig. 1B). Bei diesem kontinuierlichen Teilverfahren drehen sich sowohl der Messerkopf als auch das Werkstück 11 in einem zeitlich aufeinander abgestimmten Bewegungsablauf. Die Teilung erfolgt also kontinuierlich und Lücken 12 und die entsprechenden Zähne 13 werden quasi gleichzeitig erzeugt. Ein entsprechendes Beispiel ist in Fig. 1B dargestellt. Der Messerkopf dreht sich hier im Gegenuhrzeigersinn, während sich das Werkstücks 11 im Uhrzeigersinn dreht (diese Drehbewegung wird auch Planraddrehung genannt). In diesem Fall wird eine Epizykloide (z.B. eine verlängerte Epizykloide) erzeugt. Die Bewegungen erfolgen hier also im Gegenlauf. Wenn sich beide in der gleichen Richtung drehen, dann wird eine Hypozykloide erzeugt (wie in Fig. 1C gezeigt). In Fig. 1B ist zu erkennen, dass die Messer 23 eines entsprechenden Messerkopfes typischerweise paarweise (bei zwei, drei und mehr Messern pro Messergruppe auch gruppenweise genannt) angeordnet sind. In Fig. 1B ist zu erkennen, dass der Rollkreis RK des Messerkopfes entlang des Grundkreises GK des Werkstücks 11 abrollt. M bezeichnet hier den Mittelpunkt des Messerkopfes. Dieser Mittelpunkt M fällt mit dem Mittelpunkt des Rollkreises RK zusammen. Die Kopplung der beiden Drehbewegungen wird so vorgenommen, dass sich jeweils nur ein Messerpaar, oder eine Messergruppe, durch eine Zahnlücke 12 bewegt.

Ein Kegelrad mit einer "geradlinigen" Hypozykloide als Flankenlängsllnie kann nach dem in Fig. 2 gezeigten Prinzip erzeugt werden. Das gezeigte mathematische Prinzip ist aus verschiedenen Lehrbüchern, aber auch aus der Patentanmeldung EP 1348509 A2 bekannt. Prinzipiell bekannt ist dieser Ansatz auch aus "Stanki dja obrabotki konitscheskich zubtschatych kolos", Izdanie 2-e, V. N. Kedrinskij, K. M. Pismanik, Izdatelstvo "Maschinostroenie" Moskva 1967, Seiten 506 - 508.

Um eine Hypozykloide zu erhalten, rollt der Rollkreis RK mit dem Radius RR im Inneren des feststehenden Grundkreises GK mit Radius RG. Der Rollkreis RK dreht sich um seine Achse (Mittelpunkt M), wie durch den Pfeil P1 angedeutet ist. Wie durch den Pfeil P2 angedeutet, rollt der Rollkreis RK dabei im Gegenuhrzeigersinn im Inneren des Grundkreises GK (die Drehrichtung könnten auch umgekehrt sein). Der Zeiger Z1 ist im Rollkreis RK ortsfest radial nach außen gerichtet und einem erzeugenden Punkt U am Umfang des Rollkreises RK zugeordnet. Dieser Punkt U ist ortsfest im Koordinatensystem des Rollkreises RK. D.h. dieser Punkt U ist mit dem Rollkreis RK fest verbunden. Durch die Rollbewegung des Punktes U, d.h. durch die eigene Drehung um den Punkt M gekoppelt mit der Satellitenbewegung um dem Mittelpunkt des Grundkreises GK, erzeugt der Punkt U in dem x-y-Koordinatensystem des Grundkreises GK eine Hypozykloide HY, bzw. in dem gezeigten Spezialfall eine Gerade. Der Punkt U definiert oder beschreibt also eine geradlinige Hypozykloide (HY), wenn der Rollkreis RK im Grundkreis GK abrollt. Der Messerkopfradius $r_c$ beträgt hier $r_c$ = RR. Die beiden Kreise RK und GK sind hier in einem kartesischen x-y-Koordinatensystem dargestellt.

Die Parameterdarstellung in diesem x-y-Koordinatensystem lautet wie folgt:

$$x = (RG - RR)\cos\lambda - RR\cos\frac{RG - RR}{RR}\lambda \qquad (1)$$

$$y = (RG - RR)\sin\lambda - RR\sin\frac{RG - RR}{RR}\lambda \qquad (2)$$

In diesen Gleichungen (1) und (2) stellt $\lambda$ den Drehwinkel des Mittelpunktes M des Rollkreises RK in Bezug auf den Mittelpunkt MG des Grundkreises GK dar. In Fig. 2 ist eine Momentaufnahme gezeigt wo folgendes gilt: $\lambda$ = 0, x = RG, y = 0. Die Koordinaten von U lauten [RG, 0].

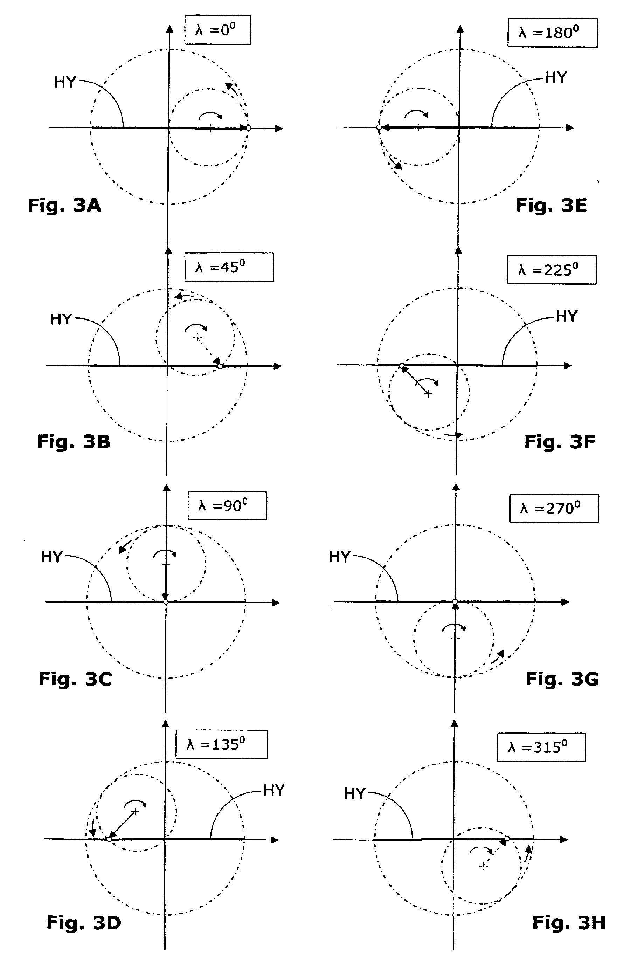

In den Figuren 3A bis 3H ist anhand einer Sequenz dargestellt, dass es einen Sonderfall gibt, bei dem aus der Hypozykloide HY eine Gerade wird. In diesen Figuren wurden bewusst die Bezeichnungen und Bezugszeichen weggelassen, um die Übersichtlichkeit der Darstellung nicht zu beeinträchtigen. Es können aber die Bezeichnungen und Bezugszeichen der Fig. 2 eins zu eins übernommen werden. Eine Gerade ergibt sich dann, wenn die Bedingung RR = RG/2, bzw. RG/RR = 2 erfüllt ist. Anhand der Figuren 3A bis 3H ist zu erkennen, dass der erzeugende Punkt U sich ausgehend von der Abbildung in Fig. 3A ($\lambda$ = 0°) entlang der x-Achse von der Koordinatenposition [RG, 0] nach links zur Koordinatenposition [-RG, 0] verschiebt. In Fig. 3E ($\lambda$ = 180°) ist diese Koordinatenposition [-RG, 0] erreicht. Nun rollt der Rollkreis RK durch die unteren beiden Quadranten des x-y-Koordinatensystems und der Punkt U bewegt sich von der Koordinatenposition [-RG, 0] zurück zur Koordinatenposition [RG, 0]. Die Gerade HY ist eine Strecke, die sich in den Figuren entlang der x-Achse von [RG, 0] bis [-RG, 0] erstreckt.

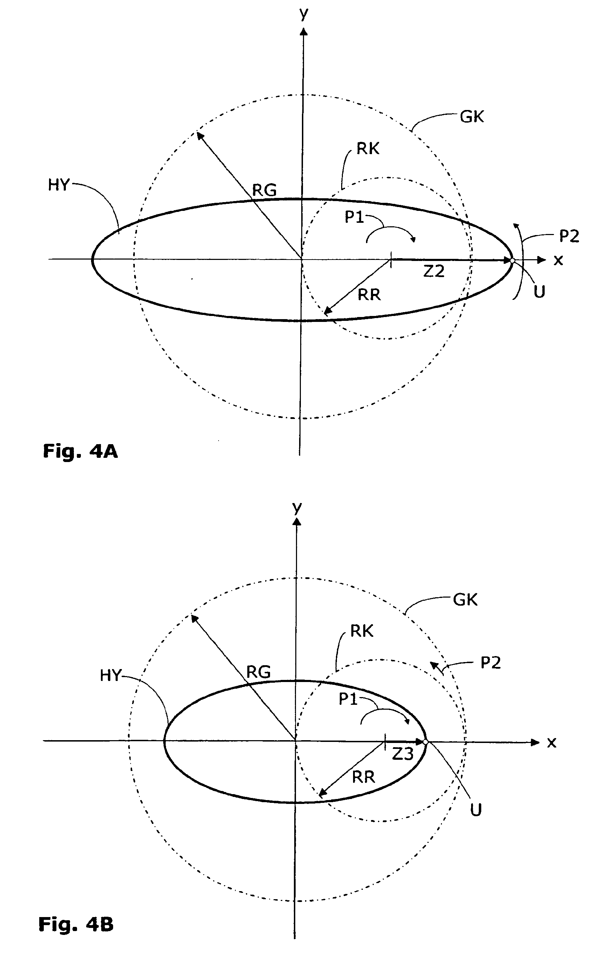

Anhand der gezeigten Abbildungen kann man auch Sonderformen der Hypozykloide erklären. Diese Sonderformen werden wie folgt erzeugt. Wenn der erzeugende Punkt U innerhalb oder außerhalb des Rollkreises RK liegt, dann spricht man entweder von einer verkürzten Hypozykloide oder entsprechend von einer verlängerten Hypozykloide. Der Abstand zwischen dem Zentrum M (siehe Fig. 2) des Rollkreises RK und der Position des erzeugenden Punkts U wird durch den Parameter c beschrieben. c < RR erzeugt also eine verkürzte Hypozykloide und c > RR erzeugt eine verlängerte Hypozykloide. In Fig. 4A ist eine verlängerte Hypozykloide mit c = 1,5 RR gezeigt. Der Zeiger Z2 hat also die Länge c = 1,5 RR (die Größe c entspricht dem Messerkopfnennradius $r_c$ in Fig. 1B). Der Messerkopfnennradius $r_c$ beträgt hier also $r_c$ = 1,5 RR. In Fig. 4B ist eine verkürzte Hypozykloide mit c = 0,5 RR gezeigt. Der Zeiger Z3 hat also die Länge c = 0,5 RR. Der Messerkopfnennradius $r_c$ beträgt hier also $r_c$ = 0,5 RR. Es wird jeweils eine Ellipse als Hypozykloide HY erzeugt, deren Parameterdarstellung als Funktion vom Winkel $\lambda$ in dem x-y-Koordinatensystem wie folgt lautet:

$$x = \left(\frac{RG}{2} + c\right)\cos\left(\frac{\lambda}{2}\right) \qquad (3)$$

$$y = \left(\frac{RG}{2} - c\right)\sin\left(\frac{\lambda}{2}\right) \qquad (4)$$

Falls c=RR und RR = RG/2 gilt, so erhält man die gerade Hypozykloide als Sonderfall, wie bereits beschrieben.

Bei den Stirnmesserköpfen, die zur Herstellung von Kegelrädern eingesetzt werden, unterscheidet man zwischen sogenannten Stabmesserköpfen und Profilmesserköpfen. Ein Stabmesserkopf wird mit vielen Stabmessern (z.B. vierzig) bestückt, wobei jedes Stabmesser einen Schaft und einen Kopfbereich aufweist. Durch Schleifen des Stabmessers kann dem Kopfbereich die gewünschte Form und Position gegeben werden. Stabmesserköpfe sind gegenüber Profilmesserköpfen, die weniger Messer enthalten produktiver und die Stabmesser sind umprofilierbar. Ein Profilmesserkopf ist hingegen mit hinterschliffenen Messern ausgestattet. Diese Formmesser (auch Profilmesser genannt) behalten beim Nachschleifen an der Spanfläche ihre Profilform. Es ist ein Vorteil des Kegelradfräsens mit Profilmessern, dass keine spezielle Schleifmaschine für das Nachschleifen dieser Formmesser erforderlich ist. Das bekannte Zyklo-Palloid®-Verfahren nutzt zum Beispiel derartige Profilmesser zum Herstellen von Spiralkegelrädern.

Gemäss Erfindung geht es um das Fräsen von Kegelrädern mit Hypozykloidverzahnung und insbesondere um das Fräsen geradverzahnter Kegelräder.

Die derzeit beim Fräsen geradverzahnter Kegelräder verwendeten Verfahren sind das Wälzfräsen (Namen bekannter Wälzfräsverfahren: Coniflex®, Konvoid und Sferoid™) und das Räumen (auch als Revacycle®-Verfahren bekannt). Es werden beim Wälzfräsen zwei gleichgroße scheibenförmige Messerköpfe zum Einsatz gebracht, bei denen die Messer am äusseren Umfang radial nach aussen zeigen. Die Achsen der beiden Messerköpfe sind zueinander geneigt, so dass an der engsten Stelle die Messer des einen Messerkopfs zwischen die Messer des anderen greifen können. So wird ein Messerkopf für die Linksflanken und eine Messerkopf für die Rechtsflanken eingesetzt wird. Beim diesem Wälzfräsen geradverzahnter Kegelräder handelt es sich um ein Einzelteilverfahren, bei dem Tellerrad und Kegelradritzel gewälzt werden. Das Räumverfahren ist auch ein Einzelteilverfahren bei dem aber die Zahnflanken von Tellerrad und Kegelritzel nicht wie bei Wälzfräsen durch Hüllschnitte erzeugt werden. Vielmehr entsprechen die Messerprofile beim Räumen exakt der Form des endgültigen Lückenprofils des Kegelrads. Das Räumverfahren ist produktiver als das Wälzfräsen im Einzelteilverfahren, hat aber den Nachteil, dass man für fast jedes Kegelrad (Übersetzungsverhältnis) einen speziellen scheibenförmigen Räummesserkopf mit einer Vielzahl verschiedener Formmesser am Umfang braucht.

Diese Beispiele belegen, dass der Werkzeugaufwand für manche Anwender zu gross und teuer sein kann, um verschiedene Kegelräder mit Hypozykloidverzahnung und insbesondere um verschiedene geradverzahnte Kegelräder herstellen zu können.

Von daher liegt der Erfindung die Aufgabe zugrunde, eine kostengünstige Lösung bereit zu stellen, die es ermöglicht verschiedene Kegelräder mit Hypozykloidverzahnung mit möglichst wenigen Werkzeugen zu fertigen.

Es liegt der Erfindung auch die Aufgabe zugrunde, eine kostengünstige Lösung bereit zu stellen, die es ermöglicht verschiedene geradverzahnte Kegelräder mit möglichst wenigen Werkzeugen zu fertigen.

Die Aufgabe wird erfindungsgemäß durch ein Verfahren gemäß Patentanspruch 1 gelöst. Vorteilhafte Ausgestaltungen der Erfindung bilden die Gegenstände der abhängigen Patentansprüche. Die Aufgabe wird auch durch einen Verwendungsanspruch nach Anspruch 6 gelöst.

Ein erfindungsgemäßes Verfahren zur Herstellung von Kegelrädern mit Hypoldverzahnung, z.B. geradverzahnter Kegelräder, mit unterschiedlichen Planradzähnezahlen mit einem Universalstirnmesserkopf zeichnet sich dadurch aus, dass folgende Schritte zum Herstellen eines ersten Kegelrads ausgeführt werden: Der Universalstirnmesserkopf wird in einer ersten Konfiguration mit einer ersten Anzahl von Messergruppen bestückt, die einer ersten Gangzahl entspricht. Es wird dann ein erstes Kegelrad im kontinuierlichen Teilverfahren unter Einsatz des Universalstirnmesserkopfes in der ersten Konfiguration erzeugt. Zum Herstellen eines zweiten Kegelrads mit einer anderen Planradzähnezahl als beim ersten, werden folgende Schritte ausgeführt : Derselbe Universalstirnmesserkopf wird in einer zweiten Konfiguration mit einer zweiten Anzahl von Messergruppen, die einer zweiten Gangzahl entspricht bestückt. Das zweite Kegelrad wird dann im kontinuierlichen Teilverfahren unter Einsatz des Universalstirnmesserkopfes in der zweiten Konfiguration erzeugt.

Eine erfindungsgemäße Verwendung definiert sich aus den Merkmalen des entsprechenden Patentanspruchs.

Vorteilhafte Ausgestaltungen der Erfindung sind den jeweiligen Unteransprüchen zu entnehmen.

Im Folgenden sind einige Vorteile der Erfindung aufgeführt. Gemäß Erfindung kann man mit nur einem Universalstirnmesserkopf mindestens zwei in ihrer Planradzähnezahl verschiedene Kegelräder mit Hypoidverzahnung herstellen. Im Sonderfall kann man auch geradverzahnte Kegelräder oder Kegelräder mit nur leicht gekrümmter Hypoidverzahnung erzeugen. Je nach Ausführung der Erfindung können mit einem Universalstirnmesserkopf je nach Konstellation sogar mehr als nur zwei verschiedene Kegelräder mit Hypoidverzahnung erzeugt werden. Dadurch reduzieren sich die Kosten für die Lagerhaltung und Handhabung. Außerdem gewinnt man an Flexibilität, wenn man mit einem Universalstirnmesserkopf mehrere verschiedene Kegelräder herstellen kann.

ZEICHNUNGEN

Die Figuren werden zusammenhängend und übergreifend beschrieben. Ausführungsbeispiele der Erfindung werden im Folgenden unter Bezugnahme auf die Zeichnungen näher beschrieben. Es zeigen:

| | |
|---|---|
| FIG. 1A | eine schematische Illustration des Einzelteilverfahrens; |
| FIG. 1B | eine schematische Illustration des kontinuierlichen Teilverfahrens, wobei hier eine Epizykloide erzeugt wird; |
| FIG. 1C | eine schematische Illustration des kontinuierlichen Teilverfahrens, wobei hier eine Hypozykloide erzeugt wird; |
| FIG. 2 | eine schematische Illustration zur Erzeugung einer Hypozykloide; |
| FIG. 3A-3H | eine schematische, schrittweise Illustration der Erzeugung einer geradlinigen Hypozykloide; |
| FIG. 4A | eine schematische Illustration zur Erzeugung einer elliptischen Hypozykloide (verlängerte Hypozykloide); |
| FIG. 4B | eine schematische Illustration zur Erzeugung einer elliptischen Hypozykloide (verkürzte Hypozykloide); |
| FIG. 5 | eine schematische Illustration eines Kegelrads mit Geradverzahnung, wobei nur ein Teil der Zähne dargestellt sind; |
| FIG. 6 | eine schematische Perspektivansicht eines Kegelradritzels mit Geradverzahnung; |
| FIG. 7 | eine perspektivische Ansicht einer Kegelradverzahnmaschine, |
| FIG. 8A | eine schematische Draufsicht eines ersten Universalstirnmesserkopf; |
| FIG. 8B | eine schematische Seitenansicht des ersten Universalstirnmesserkopf nach Fig. 8A; |
| FIG. 8C | eine schematische Perspektivansicht des ersten Universalstirnmesserkopf nach Fig. 8A; |
| FIG. 9A | eine schematische Draufsicht eines zweiten Universalstirnmesserkopf; |
| FIG. 9B | eine schematische Seitenansicht des zweiten Universalstirnmesserkopf nach Fig. 9A; |
| FIG. 9C | eine schematische Perspektivansicht des zweiten Universalstirnmesserkopf nach Fig. 9A. |

Detaillierte Beschreibung

Es geht hier um das Erzeugen von Kegelrädern mit hypozykloidischer Verzahnung. Insbesondere geht es um Kegelräder mit hypozykloidischer Geradverzahnung. Unter hypozykloidischer Verzahnung ist im vorliegenden Fall eine Verzahnung mit einer Flankenlängslinie zu verstehen, die durch eine Hypozykloide definiert ist. Unter hypozykloidischer Geradverzahnung ist im vorliegenden Fall eine Verzahnung mit einer Flankenlängslinie zu verstehen, die einer Geraden entspricht oder einer Geraden angenähert ist. Als angenäherte Gerade wird hier eine gestreckte oder verkürzte Hypozykloide verstanden, deren Krümmungsradius größer ist als 1000 mm. Ein solcher Krümmungsradius ist bei den üblichen Zahnbreiten kaum erkenn- oder wahrnehmbar und wird daher im Zusammenhang mit der vorliegenden Erfindung als hypozykloidische Geradverzahnung betrachtet.

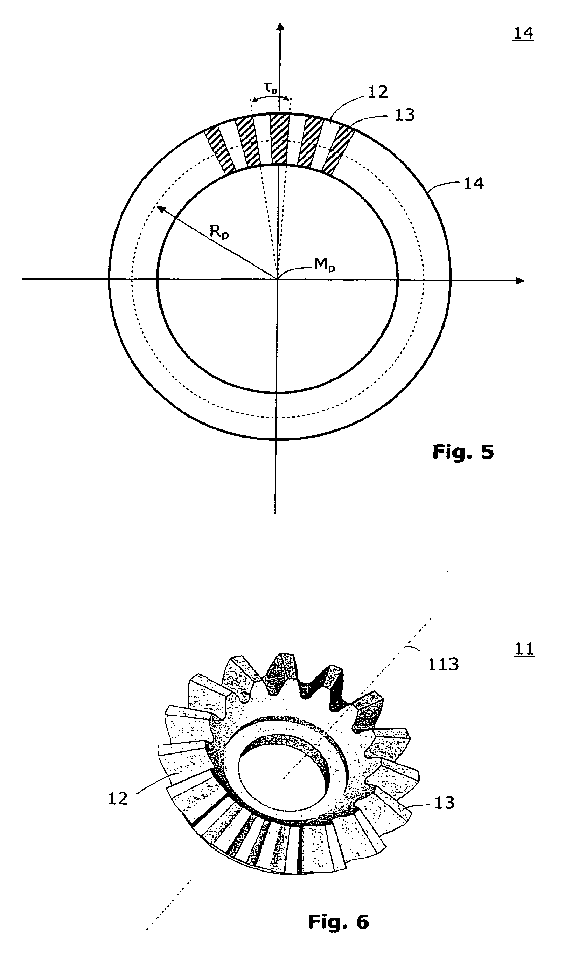

Bei der Auslegung und Herstellung eines Kegelrads 11 (siehe z.B. Fig. 6) verwendet man meist ein ebenes, virtuelles Planrad (auch Bezugs-Planrad nach DIN 3971 genannt), analog zur virtuellen Zahnstange beim Stirnrad. Es gibt zwischen dem Planrad und dem zu verwendenden Stirnmesserkopf eine feste Übersetzung, die Kopplung genannt wird. Beim kontinuierlichen Teilverfahren müssen nämlich die Drehung des Stirnmesserkopfes und die Drehung des zu bearbeitenden Kegelrades 11 so gekoppelt sein, dass sich jeweils nur eine Messergruppe des Stirnmesserkopfes durch eine Zahnlücke 12 des Kegelrades 11 bewegt und sich die nächste Messergruppe durch die nächste Lücke 12 bewegt. Das Planrad hat eine Planradzähnezahl $z_p$, wie eingangs erwähnt. Diese Planradzähnezahl $z_p$ ist eine Rechengröße und ist daher meistens keine ganze Zahl (siehe Formel (5)). Das Verhältnis der Planradzähnezahl $z_p$ zur Gangzahl $G_x$ des Stirnmesserkopfes entspricht dem Verhältnis von Grundkreisradius RG und Rollkreisradius RR. Die Gangzahl $G_x$ des Stirnmesserkopfes entspricht der Anzahl der Messergruppen und wird auch als Messergruppenzahl $z_0$ bezeichnet. Für gefräste Kegelräder 11 ergibt sich die Planradzähnezahl $z_p$ aus der Formel:

$$z_p = \frac{z}{\sin \delta} \qquad (5)$$

wobei $z$ die Zähnezahl des Kegelrades 11 und $\delta$ der Teilkegelwinkel des Kegelrades 11 sind.

In Fig. 5 ist eine schematische Illustration eines Planrades 14 mit hypozykloidischer Geradverzahnung gezeigt, wobei nur ein Teil der Zähne 13 (im vorliegenden Fall fünf Zähne) schraffiert dargestellt sind. Es gilt für ein solches Planrad 14 die folgende Gleichung (6):

$$\tau_p = \frac{m_p \cdot \pi}{R_P} = \frac{2 \cdot \pi}{z_P} \qquad . \qquad (6)$$

Anhand dieser Gleichung (6) kann der Planrad-Teilungswinkel $\tau_p$ berechnet werden, wenn man (Planrad-) Modul $m_p$ und Planrad-Halbmesser $R_p$, oder wenn man die Planradzähnezahl $z_p$ kennt. In Fig. 5 ist zu erkennen, dass bei einem geradverzahnten Kegelrad 11 die Bezugsflankenlinien (Flankenlinie) Geraden sind, die meist radial durch die Planradmitte $M_P$ gehen.

Man kann also anhand der Anzahl der Messergruppen $Z_0$, die hier in folgendem Verhältnis zur Planradzähnezahl $z_p$ steht, alle erforderlichen Teilkegelparameter für ein Kegelradpaar berechnen:

$$\frac{z_p}{z_0} = \frac{RG}{RR} = \frac{\frac{z}{\sin \delta}}{G_x} \qquad (7)$$

Die entsprechenden Formeln sind einschlägig bekannt. Details können zum Beispiel dem Buch "Kegelräder; Grundlagen, Anwendungen", Jan Klingelnberg, Springer Verlag, 2008, entnommen werden, wo die entsprechenden Formeln auf den Seiten 39 ff dargestellt sind.

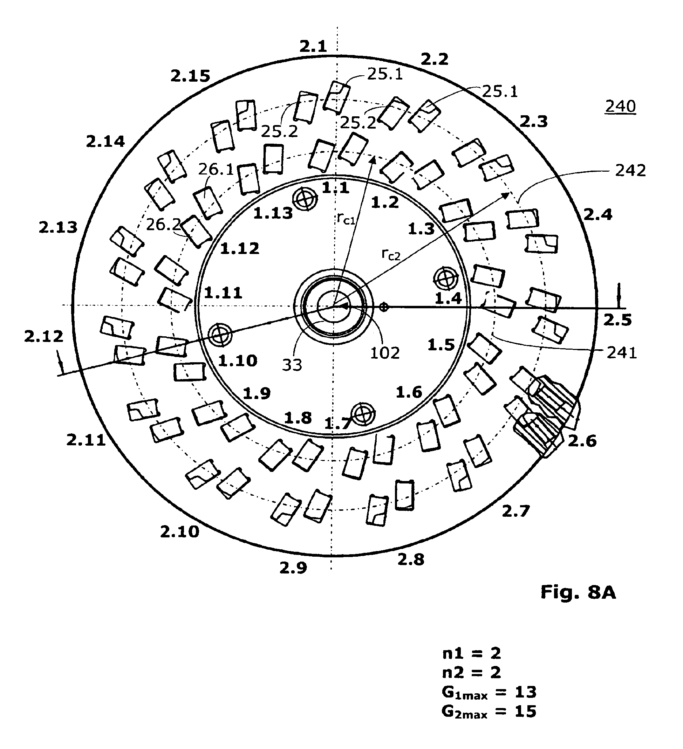

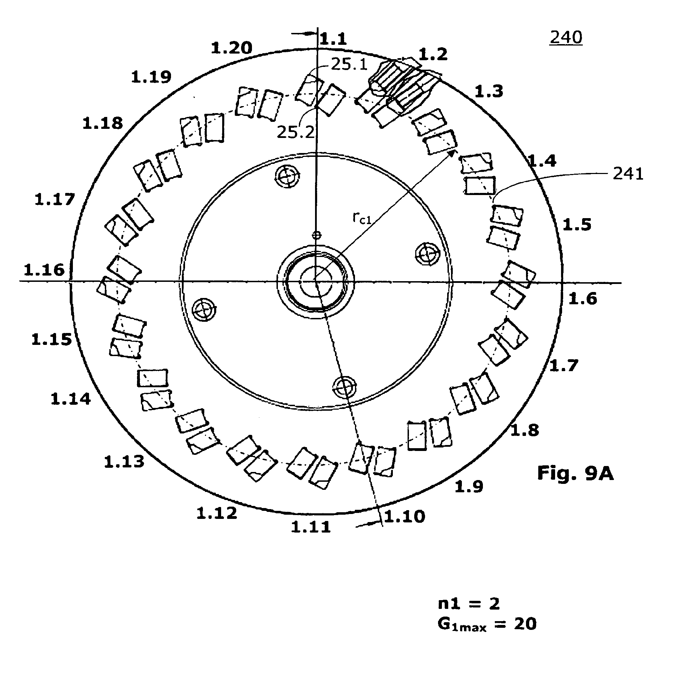

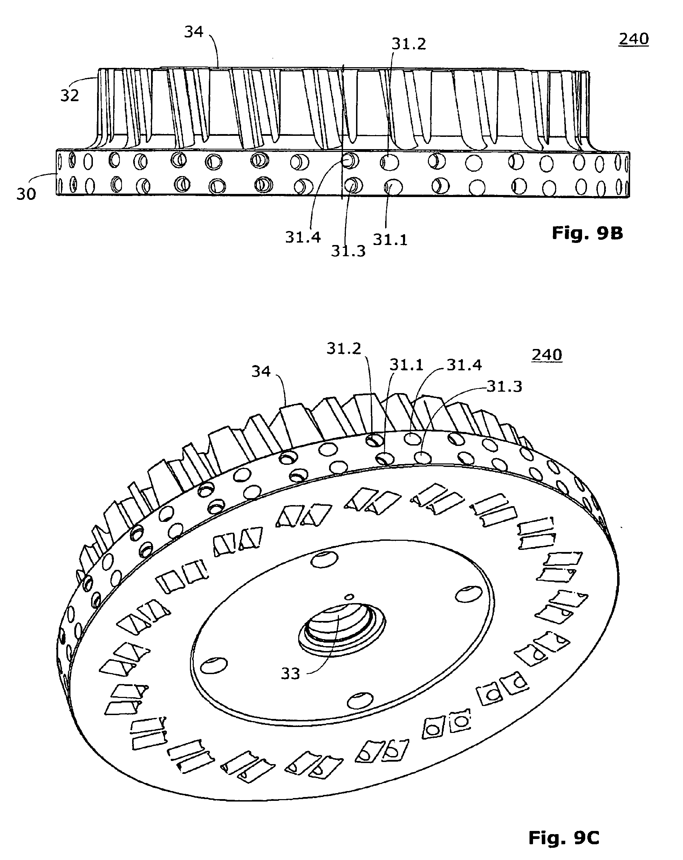

Anhand dieser Erkenntnisse lassen sich universell einsetzbare Stirnmesserköpfe 240 (siehe Fig. 8A-8C und 9A-9C) berechnen und herstellen, die dazu verwendet werden können, mit ein und demselben Stirnmesserkopf 240 mindestens zwei verschiedene Kegelräder mit Hypoidverzahnung zu erzeugen.

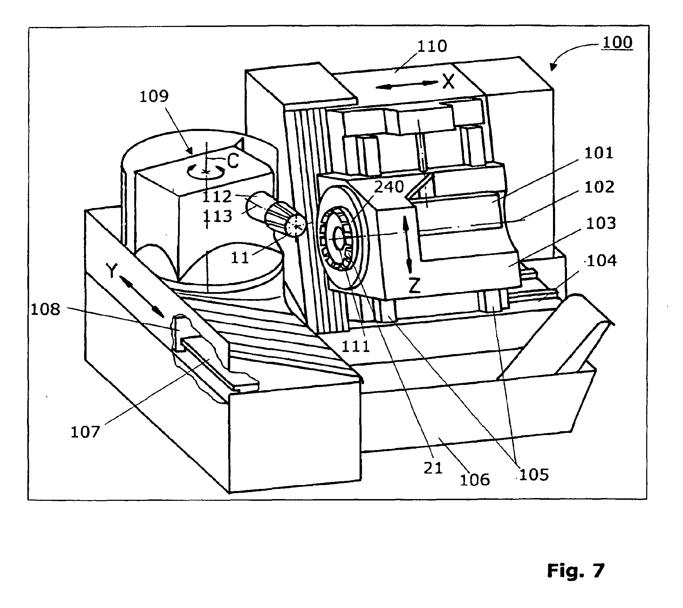

Fig. 7 zeigt in perspektivischer Darstellung den Grundaufbau einer entsprechenden CNC-Maschine 100 (auch Kegelrad-Verzahnmaschine genannt) zum Verzahnen von Kegelrädern 11, hier von Kegelradritzeln 11 mit Hypoidverzahnung und Tellerrädern mit Hypoidverzahnung, gemäß Erfindung.

Die CNC-Maschine 100 kann wie folgt aufgebaut sein. Auf einem Maschinenbett 106 ist ein Maschinengehäuse 110 entlang einer geraden Koordinatenachse X (1. Achse) horizontal und linear geführt. Ein erster Schlitten 103 ist auf einer Führung 105, die an einer Seitenfläche des Maschinengehäuses 110 angebracht ist, entlang einer geraden Koordinatenachse Z (2. Achse) mittels eines Spindeltriebs 101 in der Höhe verfahrbar. Auf dem Maschinenbett 104 ist ein Werkstückspindelträger mit einem zweiten Schlitten 108 entlang einer geraden Koordinatenachse Y (3. Achse), die bei der in Fig. 7 gezeigten CNC-Maschine 100 zur X-Achse rechtwinkelig ist, auf einer Führung 107 horizontal und linear geführt. Auf dem Schlitten 108 befindet sich eine erste Schwenkvorrichtung 109 mit vertikaler Achse C (4. Achse). Die Führung 105 des ersten Schlittens 103 und die Z-Achse sind bei der in Fig. 7 gezeigten CNC-Maschine 100 gegen die Vertikale geneigt.

Der erste Schlitten 103 trägt eine um eine Werkzeugspindelachse 102 (5. Achse) drehbar gelagerte Werkzeugspindel 111. Die Werkzeugspindel 111 trägt ein Werkzeug, hier beispielsweise einen Universalstirnmesserkopf 240 mit mehreren Stabmessern 21. Durch den zweiten Schlitten 108 und durch die erste Schwenkvorrichtung 109 ist eine Werkstückspindel 112 auf dem Maschinenbett 106 horizontal geführt und linear verschiebbar bzw. schwenkbar. Die erste Schwenkvorrichtung 109 trägt die Werkstückspindel 112, die um eine Werkstückspindelachse 113 (6. Achse) drehbar ist. Die Werkstückspindel 112 trägt ein Werkstück 11, im vorliegenden Beispiel ein geradverzahntes Kegelradritzel 11. Die erste Schwenkvorrichtung 109 ist um die C-Achse horizontal geführt schwenkbar, um das Werkstück 11 in eine Bearbeitungsposition zu schwenken. Zum Aufspannen des Werkstücks 11 kann die Werkstückspindel 112 mit einer Spannvorrichtung versehen sein.

Ein Universalstirnmesserkopf 240 zur Durchführung des erfindungsgemäßen Verfahrens hat entweder

(1) nur einen festen Messerkopfnennradius $r_c$ (auch Flugkreisradius genannt) und eine maximale Gangzahl $G_{max}$, die geradzahlig ist und die mindestens einmal teilbar ist durch eine ganze Zahl $G_G$, die größer oder gleich Zwei ist (ein Beispiel für einen solchen Stirnmesserkopf 240 ist in den Figuren und 9A-9C gezeigt); oder

(2) mindestens zwei feste Messerkopfnennradien $r_{c1}$ und $r_{c2}$, sowie

A. eine erste Gangzahl $G_{1max}$, welche die Anzahl von Messergruppen festlegt, die auf dem ersten Messerkopfnennradius $r_{c1}$ angeordnet werden können, und
B. eine zweite Gangzahl $G_{2max}$, welche die Anzahl von Messergruppen festlegt, die auf dem zweiten Messerkopfnennradius $r_{c2}$ angeordnet werden können (ein Beispiel für einen solchen Stirnmesserkopf 240 ist in den Figuren und 8A-8C gezeigt).

Im Fall (1) kann je nach Bestückung des ersten Universalstirnmesserkopfes 240 entweder ein erstes Kegelrad 11 mit Hypozykloidverzahnung erzeugt werden, wobei $Z_0$ der maximalen Gangzahl $G_{max}$ entspricht ($Z_0$ ist die Anzahl von Messergruppen), oder es kann mit dem ersten Universalstirnmesserkopf 240 ein zweites Kegelrad 11 mit Hypozykloidverzahnung erzeugt werden, wobei $Z_0$ einer Gangzahl $G_x$ entspricht, die sich durch eine Division der maximale Gangzahl $G_{max}$ durch die Zahl $G_G$ ergibt. Ein entsprechendes Beispiel für einen solchen Stirnmesserkopf 240 wird im Zusammenhang mit den Figuren und 9A-9C erläutert.

Im Fall (2)A kann ein Kegelrad 11 mit Hypozykloidverzahnung erzeugt werden, wobei $Z_0$ der ersten Gangzahl $G_{1max}$ entspricht. Im Fall (2)B kann ein weiteres Kegelrad 11 mit Hypozykloidverzahnung erzeugt werden, wobei $Z_0$ der zweiten Gangzahl $G_{2max}$ entspricht.

Man kann sowohl mit einem ersten Universalstirnmesserkopf gemäß dem Fall (1) als auch mit einem zweiten Universalstirnmesserkopf nach dem Fall (2)A/2(B) mindestens je zwei verschiedene Kegelräder 11 mit Hypozykloidverzahnung erzeugen.

Ein erster Universalstirnmesserkopf 240 zur Durchführung des erfindungsgemäßen Verfahrens kann also in einer ersten Konfiguration mit der maximal möglichen Anzahl von Messergruppen $G_{max}$ bestückt werden, um ein erstes Kegelrad 11 mit Hypozykloidverzahnung zu erzeugen. Die maximale Gangzahl $G_{max}$ muss eine gerade Zahl sein. Dieses erste Kegelrad 11 ist definiert durch ein Verhältnis von Planradzähnezahl $z_p$ zu der maximalen Gangzahl $G_{max}$ (gleich der Anzahl von Messergruppen $z_0$) des ersten Universalstirnmesserkopfes 240. Will man ein geradverzahntes Kegelrad 11 mit Hypozykloidverzahnung erzeugen, so kann das Verhältnis von Grundkreisradius RG zu Rollkreisradius RR mit RG/RR = 2 gewählt werden.

Derselbe erste Universalstirnmesserkopf 240 kann in einer zweiten Konfiguration mit einer geringeren Anzahl $G_x$ von Messergruppen bestückt werden, wobei sich diese Anzahl $G_x$ von Messergruppen aus einer Division der maximalen Gangzahl $G_{max}$ durch eine ganze Zahl $G_G \geq 2$ ergibt. In dieser zweiten Konfiguration kann dann ein zweites Kegelrad 11 mit Hypozykloidverzahnung erzeugt werden. Falls auch dieses zweite Kegelrad 11 eine Geradverzahnung haben soll, so kann folgende Bedingung gewählt werden: Das Verhältnis von Planradzähnezahl $z_p$ zur Gangzahl $G_x$ (gleich der Anzahl von Messergruppen $z_0$) des ersten Universalstirnmesserkopfes 240 ist durch das Verhältnis von Grundkreisradius RG zu Rollkreisradius RR wird durch RG/RR = 2 definiert.

Ein solcher erster Universalstirnmesserkopf 240 lässt sich also mindestens zum Herstellen von zwei verschiedenen Kegelrädern 11 mit Hypozykloidverzahnung einsetzen. Dadurch werden die Werkzeug- und Lagerkosten reduziert.

Bei einer geeigneten Wahl der maximalen Gangzahl $G_{max}$, kann man also, wie beschrieben, ein und denselben ersten Universalstirnmesserkopf 240 für das Herstellen von mehr als zwei verschiedenen Kegelrädern 11 mit Hypozykloidverzahnung einsetzen. In diesem Fall muss die maximale Gangzahl $G_{max}$ so gewählt werden, dass sie durch mehrere ganze Zahlen größer gleich Zwei teilbar ist. Dies ist im Folgenden anhand eines Beispiels illustriert.

Bei einer Planradzähnezahl von z.B. 48,7, kann man z.B. einen Stirnmesserkopf 240 einsetzen, der entweder eine Gangzahl 24 oder eine Gangzahl 25 hat. Es muss hier auf- oder abgerundet werden, da es nur ganzzahlige Gangzahlen $G_x$ gibt.

Wenn die maximale Gangzahl eines Stirnmesserkopfes 240 $G_{max}$ = 48 ist, dann ergeben sich folgende Konstellationen. Es ist hier zu beachten, dass Planradzähnezahlen $z_p$, die kleiner als 8 sind technologisch wenig sinnvoll sind.

| maximale Gangzahl $G_{max} = 48$ | $G_G$ (Teiler) | Gangzahl in der jeweiligen Konfiguration | Planradzähnezahl $z_p$ bei hypozykloidischer, ideal geradliniger Flankenlängslinie (RR = RG/2) | typische Planradzähnezahl bei hypozykloidischer nicht-gerader Flankenlängslinie RG/RR $\neq$ 2 und c$\neq$RR |
|---|---|---|---|---|
| 1. Kegelrad | 1 | 48 | ca. 96 | 91,2 < z < 108 |
| 2. Kegelrad | 2 | 24 | ca. 48 | 45,6 < z < 50,4 |
| 3. Kegelrad | 3 | 16 | ca. 36 | 30,4 < z < 33,6 |
| 4. Kegelrad | 4 | 12 | ca. 24 | 22,8 < z < 52,2 |
| 5. Kegelrad | 6 | 8 | ca. 16 | 15,2 < z < 16,8 |
| 6. Kegelrad | 8 | 6 | ca. 12 | 11,4 < z < 12,6 |
| 7. Kegelrad | 12 | 4 | ca. 8 | 7,6 < z < 8,4 |

Gemäß Erfindung geht es also um ein Stirnmesserkopfverfahren zur Herstellung von Kegelrädern 11 mit Hypozykloidverzahnung im kontinuierlichen Teilverfahren. Es kommt ein Universalstirnmesserkopf 240 zum Einsatz, der sich zum Kegelrad 11 in einer Gleichlaufbewegung befindet (siehe Fig. 1C). Der Universalstirnmesserkopf 240 weist einen Messerkopfnennradius $r_c$ und eine maximale Gangzahl $G_{max}$ auf, die mindestens einmal teilbar ist durch eine ganze Zahl $G_G$, die größer gleich Zwei ist. Unter diesen Voraussetzungen kann der Universalstirnmesserkopf 240 mindestens zum Herstellen von zwei verschiedenen Kegelrädern 11 mit Hypozykloidverzahnung wie folgt eingesetzt werden:

- Bestücken des Universalstirnmesserkopfes 240 mit einer maximalen Anzahl von Messergruppen, die der maximalen Gangzahl $G_{max}$ entspricht, und

- Herstellen eines erstens Kegelrades 11 mit Hypozykloidverzahnung.

- Dann kann derselbe Universalstirnmesserkopf 240 erneut bestückt werden, wobei diesmal eine zweite Anzahl von Messergruppen zum Einsatz kommt, die einer Gangzahl $G_x$ entspricht, die sich aus einer Division der maximalen Gangzahl $G_{max}$ durch die ganze Zahl $G_G$ ergibt (d.h. $G_x = G_{max}/G_G$).

- Dann folgt das Herstellen eines zweiten Kegelrades 11 mit Hypozykloidverzahnung.

Im besagten Beispiel ergeben sich zwei verschiedene Kegelräder 11 mit Zähnen 13, die hypozykloidische Längsflanken haben.

Gemäß Erfindung kann der zuvor beschriebene Ansatz auch eingesetzt werden, wenn folgendes Verhältnis vorgegeben wird: RG/RR = 2. In diesem Fall werden Kegelräder mit geradverzahnter Hypozykloide erzeugt. Wenn hier RG/RR * 2 ist, und dieses Verhältnis von RG/RR nur geringfügig von 2 abweicht, dann ergibt sich eine hypozykloidische Flankenlängslinie, die nahezu gerade ist, da ihr Krümmungsradius größer ist als 1000 mm.

Ein beispielhaftes Kegelrad 11 mit Geradverzahnung kann zum Beispiel eine Planradzähnezahl $z_p = 29{,}69848$ und eine Zähnezahl z = 21 haben. Folgende Parameter (nach DIN 3966) charakterisieren ein solches Kegelrad weiter: Modul $m_p = 4{,}233$, Teilkegelwinkel δ = 45 Grad, äußerer Teilkreisdurchmesser $d_e = 88{,}90$ mm und äußere Teilkegellänge $R_e = 62{,}862$ mm. Um bei einer solchen Planradzähnezahl $Z_p = 29{,}69848$ eine geradlinige Hypozykloidverzahnung erzeugen zu können, wird ein Stirnmesserkopf 240 eingesetzt, der eine Gangzahl $G_x$ von $Z_p/2 = 14{,}84924$ hat. Da es nur ganzzahlige Gangzahlen $G_x$ gibt, beträgt die Gangzahl $G_x$ hier entweder 14 oder 15. Es kann hier also ein Stirnmesserkopf 240 nach Fig. 8A eingesetzt werden, bei dem $G_{2max} = 15$ ist.

Das Prinzip der Erfindung wird nun anhand der Figuren 8A bis 8C weiter erläutert. In Fig. 8A ist eine schematische Draufsicht eines ersten erfindungsgemäßen Stirnmesserkopfes 240 gezeigt, der dazu ausgelegt ist je nach Bestückung/Konfiguration verschiedene Kegelräder 11 mit Hypozykloidverzahnung erzeugen zu können. Der gezeigte Stirnmesserkopf 240 weist eine erste Anzahl $G_{1max}$ von Aufnahmeöffnungen 26.1, 26.2 auf, die entlang eines ersten Nennkreises 241 mit Messerkopfnennkreisradius $r_{c1}$ angeordnet sind. Das Bezugszeichen 26.1 bezeichnet die Aufnahmeöffnungen für Außenmesser und das Bezugszeichen 26.2 bezeichnet die Aufnahmeöffnungen für Innenmesser des ersten (inneren) Nennkreises 241, der auch als Flugkreis bezeichnet wird.

Außerdem weist der Stirnmesserkopf 240 eine zweite Anzahl $G_{2max}$ von Aufnahmeöffnungen auf, die entlang eines zweiten (äußeren) Nennkreises 242 mit Messerkopfnennkreisradius $r_{c2}$ angeordnet sind. Das Bezugszeichen 25.1 bezeichnet die Aufnahmeöffnungen für Außenmesser und das Bezugszeichen 25.2 bezeichnet die Aufnahmeöffnungen für Innenmesser des zweiten (äußeren) Nennkreises 242, der auch als Flugkreis bezeichnet wird.

Ein Stabmessersatz umfasst mehrere (Stab-)Messergruppen. Die Zahlen $G_{1max}$ und $G_{2max}$ geben die maximale Anzahl der Messergruppen pro Nennkreis 241 und 242 an. Im gezeigten Beispiel betragen $G_{2max}$=15 und $G_{1max}$=13. Jede Messergruppe umfasst hier n1=2 und n2=2 Stabmesser (jeweils ein Innenmesser und ein Außenmesser). Es ist auch möglich, dass jede Messergruppe mehr als zwei Stabmesser umfasst. Die Positionen der einzelnen Messergruppen sind hier mit Zahlen 2.1 bis 2.15 für den äußeren Nennkreis 242 und mit den Zahlen 1.1 bis 1.13. für den inneren Nennkreis 241 bezeichnet.

Für das Außenmesser eines Messersatzes ist an der Position 2.1 eine Aufnahmeöffnung 25.1 vorgesehen. Die Aufnahmeöffnung 25.2 für das Innenmesser dieses Messersatzes befindet sich an der Position 2.1 in einem kleinen Winkelabstand gegen den Uhrzeigersinn verdreht. Alle Außenmesser dieses Messersatzes sitzen auf oder entlang dem/des konzentrischen Messerkopfnennkreis 242 mit Messerkopfnennradius $r_{c2}$. Alle Innenmesser dieses Messersatzes sitzen auch auf oder entlang dem/des konzentrischen Messerkopfnennkreis 242 mit einem Messerkopfnennradius $r_{c2}$. Hier ist $r_{c2}$ zum Beispiel 5"/2 (= 2,5 inch = 63,5 mm).

Für das Außenmesser eines weiteren Messersatzes ist z.B. an der Position 1.12 eine Aufnahmeöffnung 26.1 vorgesehen. Die Aufnahmeöffnung 26.2 für das Innenmesser dieses Messersatzes befindet sich an der Position 1.12 in einem kleinen Winkelabstand gegen den Uhrzeigersinn verdreht. Alle Außenmesser dieses Messersatzes sitzen auf dem konzentrischen ersten Messerkopfnennkreis 241 mit Messerkopfnennradius $r_{c1}$. Alle Innenmesser dieses Messersatzes sitzen auch auf dem konzentrischen ersten Messerkopfnennkreis 241 mit einem Messerkopfnennradius $r_{c1}$. Hier ist $r_{c1}$ zum Beispiel 3,75"/2 (= 1,875 inch = 47,625 mm).

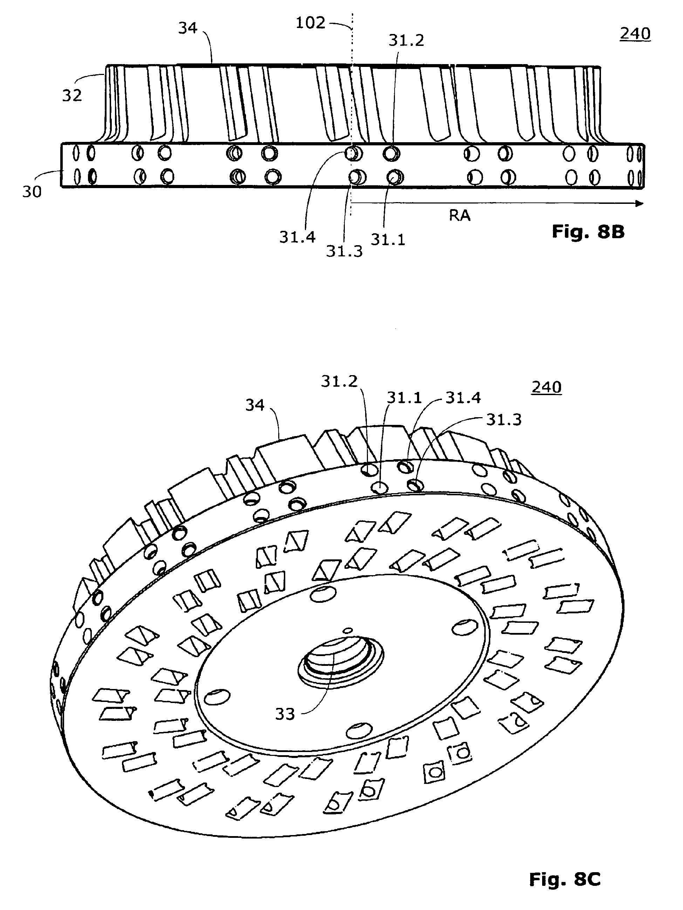

Der Außendurchmesser (=2*RA) des Stirnmesserkopfes 240 (siehe Fig. 8B) ergibt sich aus dem größten Messerkopfnenndurchmesser 2*$r_{c2}$, der auf dem Stirnmesserkopf 240 unterzubringen ist. Wenn der größte Messerkopfnenndurchmesser zum Beispiel 2*$r_{c1}$=7,5" (7,5 inch = 190,5 mm) beträgt, dann ist der Außendurchmesser vorzugsweise ca. 268 mm. Wenn der größte Messerkopfnenndurchmesser zum Beispiel 2*$r_{c2}$=3,75" (3,75 inch = 95,25 mm) beträgt, dann ist der Außendurchmesser vorzugsweise ca. 165 mm.

Die konzentrischen Messerkopfnennkreise 241, 242 haben alle einen gemeinsamen Mittelpunkt M, der zusammenfällt mit der Werkzeugspindelachse 102 des Stabmesserkopfs 240.

Ein solcher Stirnmesserkopf 240, der in den Figuren 8A bis 8C gezeigt ist, kann zwei existierende (einen 3,75" und einen 5" Messerkopf) Messerköpfe ersetzen. Wenn der Stirnmesserkopf 240 komplett (d.h. die Anzahl der Messergruppen entspricht $G_{1max}$) mit den Stabmessern eines ersten Messersatzes bestückt ist, kann ein erstes Kegelrad 11 mit einer ersten hypozykloidischen Verzahnungsgeometrie gefertigt werden. Wenn der Stirnmesserkopf 240 komplett (d.h. die Anzahl der Messergruppen entspricht $G_{2max}$) mit den Stabmessern eines zweiten Messersatzes bestückt ist, kann ein zweites anderes Kegelrad 11 mit einer anderen hypozykloidischen Verzahnungsgeometrie gefertigt werden.

Der Stirnmesserkopf 240 kann entlang des äußeren Nennkreises 242 aber auch mit einer kleineren Zahl ($G_x$ < $G_{2max}$) an Stabmessern bestückt werden. Die Zahl $G_{2max}$=15 lässt sich durch die ganzen Zahlen $G_G$=3 und $G_G$=5 teilen. Daher kann der Stirnmesserkopf 240 in einer weiteren Konfiguration entlang des äußeren Nennkreises 242 zum Beispiel mit $G_x$=5 oder mit $G_x$=3 Messergruppen bestückt werden. Falls der Stirnmesserkopf 240 mit $G_x$=5 Messergruppen bestückt wird, so sitzen diese fünf Messergruppen an den Positionen 2.1, 2.4, 2.7, 2.10 und 2.13. Falls der Stirnmesserkopf 240 mit $G_x$=3 Messergruppen bestückt wird, so sitzen diese drei Messergruppen an den Positionen 2.1, 2.6 und 2.11. Die Winkelposition der Innen- und Außenmesser der jeweiligen Messergruppen sind äquidistant, da zwischen dem Stirnmesserkopf 240 und dem zu bearbeitenden Kegelrad 11 eine feste Kopplung beim Fertigen der Zahnlücken 12 vorgegeben ist. Nur wenn die einzelnen Innenmesser oder Aussenmesser in gleichmäßigen Winkelabständen entlang der Nennkreise 241, 242 angeordnet sind, kann gewährleistet werden, dass bei konstant vorgegebenen Drehzahlen Zahnlücken 12 in gleichmäßigen Abständen erzeugt werden.

In Fig. 8B ist eine Seitenansicht und in Fig. 8C eine perspektivische Ansicht des Stirnmesserkopfs 240 von Fig. 8A gezeigt. Es sind pro Stabmesser zwei Befestigungsbohrungen vorgesehen. Die beiden Befestigungsbohrungen 31.1, 31.2 dienen zum Befestigen eines Innenmessers. Die beiden Befestigungsbohrungen 31.3, 31.4 dienen zum Befestigen eines Außenmessers.

Die folgende Tabelle zeigt zusammenfassend, wie der Universalstirnmesserkopf 240 gemäß den Figuren 8A-8C auf dem äußeren Nennkreis 242 in unterschiedlichen Konfigurationen bestückt werden kann.

| maximale äußere Gangzahl $G_{2max}$ = 15 | $G_G$ (Teiler) | Gangzahl in der jeweiligen Konfiguration | Planradzähnezahl $z_p$ bei hypozykloidischer, ideal geradliniger Flankenlängslinie (RR = RG/2) | Typische Planradzähnezahl bei hypozykloidischer, nicht-gerader Flankenlängslinie RG/RR ≠2 und c ≠RR |
|---|---|---|---|---|
| 1. Kegelrad | 1 | 15 | ca. 30 | 28,5 < z < 31,5 |
| 2. Kegelrad | 3 | 5 | ca. 10 | 9,5 < z < 10,5 |
| 3. Kegelrad | 5 | 3 | ca. 6 | 5,7 < z < 6,3 |

Die folgende Tabelle zeigt zusammenfassend, wie der Universalstirnmesserkopf 240 gemäß den Figuren 8A-8C auf dem inneren Nennkreis 241 bestückt werden kann. Da die Gangzahl $G_{1max}$ = 13 nicht teilbar ist, gibt es hier nur eine mögliche Konfiguration.

| maximale innere Gangzahl $G_{1max}$ = 13 | $G_G$ (Teiler) | Gangzahl in der jeweiligen Konfiguration | Planradzähnezahl $z_p$ bei hypozykloidischer, ideal geradliniger Flankenlängslinie (RR = RG/2) | Typische Planradzähnezahl bei hypozykloidischer, nicht-gerader Flankenlängslinie RG/RR ≠ 2 und c≠RR |
|---|---|---|---|---|
| 1. Kegelrad | 1 | 13 | ca. 26 | 24,7 < z < 27,3 |

Eine weitere Ausführungsform ist in den Figuren 9A bis 9C gezeigt. In Fig. 9A ist eine schematische Draufsicht eines zweiten Stirnmesserkopfes 240 gezeigt, der dazu ausgelegt ist je nach Bestückung/Konfiguration verschiedene Kegelräder 11 mit Hypozykloidverzahnung erzeugen zu können. Der gezeigte Stirnmesserkopf 240 weist eine Anzahl $G_{1max}$ von Aufnahmeöffnungen 25.1, 25.2 auf, die entlang des ersten Nennkreises 241 mit Messerkopfnennkreisradius $r_{c1}$ angeordnet sind. Das Bezugszeichen 25.1 bezeichnet die Aufnahmeöffnungen für Außenmesser und das Bezugszeichen 25.2 bezeichnet die Aufnahmeöffnungen für Innenmesser des Nennkreises 241.

Der Stirnmesserkopf 240 kann entlang des ersten Nennkreises 241 entweder mit $G_{1max}$=20 Messergruppen oder auch mit einer kleineren Zahl ($G_x$ < $G_{1max}$) an Stabmessern bestückt werden. Die Zahl $G_{1max}$=20 lässt sich durch die ganzen Zahlen $G_G$=10, $G_G$=5, $G_G$=4 und $G_G$=2 teilen. Daher kann der Stirnmesserkopf 240 in einer weiteren Konfiguration entlang des Nennkreises 241 zum Beispiel mit $G_x$=10, $G_x$=5, $G_x$=4 oder mit $G_x$=2 Messergruppen bestückt werden. Falls der Stirnmesserkopf 240 z.B. mit $G_x$=10 Messergruppen bestückt wird, so sitzen diese zehn Messergruppen an den Positionen 1.1, 1.3, 1.5, 1.7, 1.9, 1.11, 1.13, 1.15, 1.17 und 1.19. Falls der Stirnmesserkopf 240 z.B. mit $G_x$=4 Messergruppen bestückt wird, so sitzen diese vier Messergruppen an den Positionen 1.1, 1.6, 1.11 und 1.16. Die Winkelposition der Innen- und Außenmesser der jeweiligen Messergruppen sind äquidistant, da zwischen dem Stirnmesserkopf 240 und dem zu bearbeitenden Kegelrad 11 eine feste Kopplung beim Fertigen der Zahnlücken vorgegeben ist. Nur wenn die einzelnen Stabmesser in gleichmäßigen Winkelabständen entlang der Nennkreise angeordnet sind, kann gewährleistet werden, dass bei konstant vorgegebenen Drehzahlen Zahnlücken 12 in gleichmäßigen Abständen erzeugt werden.

Die folgende Tabelle zeigt zusammenfassend, wie der Universalstirnmesserkopf 240 gemäß den Figuren 9A-9C auf dem Nennkreis 241 in unterschiedlichen Konfigurationen bestückt werden kann.

| maximale Gangzahl $G_{1max}$ = 20 | $G_G$ (Teiler) | Gangzahl in der jeweiligen Konfiguration | Planradzähnezahl $z_p$ bei hypozykloidischer, ideal geradliniger Flankenlängslinie (RR = RG/2) | Typische Planradzähnezahl bei hypozykloidischer, nicht-gerader Flankenlängslinie RG/RR ≠ 2 und c≠RR |
|---|---|---|---|---|
| 1. Kegelrad | 1 | 20 | ca. 40 | 38 < z < 42 |
| 2. Kegelrad | 2 | 10 | ca. 20 | 19 < z < 21 |

(fortgesetzt)

| maximale Gangzahl $G_{1max} = 20$ | $G_G$ (Teiler) | Gangzahl in der jeweiligen Konfiguration | Planradzähnezahl $z_p$ bei hypozykloidischer, ideal geradliniger Flankenlängslinie (RR = RG/2) | Typische Planradzähnezahl bei hypozykloidischer, nicht-gerader Flankenlängslinie RG/RR ≠ 2 und c≠RR |
|---|---|---|---|---|
| 3. Kegelrad | 4 | 5 | ca. 10 | 9,5 < z < 10,5 |
| 4. Kegelrad | 5 | 4 | ca. 8 | 7,6 < z < 8,4 |
| 5. Kegelrad | 10 | 2 | ca. 4 | 3,8 < z < 4,2 |

Die Stirnmesserköpfe 240 haben, wie üblich, eine im Wesentlichen zylindersymmetrische Grundform mit einem tellerförmigen Kopfbereich 30 und einem zylinderförmigen Rückbereich 32. Mittig ist eine Zentralbohrung 33 vorhanden, um den Stirnmesserkopf 240 auf einer Werkzeugspindel (z.B. an einem Spindeltrieb 101 in Fig. 7) befestigen zu können.

Die Aufnahmeöffnungen 25.1, 25.2, 26.1, 26.2 sind vorzugsweise so ausgeführt, dass sie sich gerade oder schräg durch die Stirnmesserköpfe 240 hindurch erstrecken. Damit sind die Aufnahmeöffnungen sowohl auf der Vorderseite des Kopfbereichs 30 als auch auf der Rückseite 34 sichtbar.

Bei den Stirnmesserköpfen 240 dienen vorzugsweise präzise gefertigte Schlitze als Aufnahmeöffnungen 25.1, 25.2, 26.1, 26.2 für die exakte radiale und winkelmäßige Festlegung der Positionen der Stabmesser. Die Aufnahmeöffnungen 25.1, 25.2, 26.1, 26.2 bilden sogenannte Messerkammern für die exakte radiale und winkelmäßige Festlegung der Positionen und für das Befestigen der Stabmesser z.B. mittels Klemmschrauben.

Vorzugsweise können Distanzplatten in die Messerkammern eingelegt werden, um die Stabmesser radial in den jeweiligen Aufnahmeöffnungen 25.1, 25.2, 26.1, 26.2 in kleinen Schritten (der Dicke der Distanzplatten entsprechend) verschieben zu können. Dieser Ansatz mit den Distanzplatten, die auch als Parallelplatten bezeichnet werden, ist hinlänglich bekannt und fand schon bei älteren Messerköpfen Anwendung.

Es können zum Positionieren und Befestigen der Stabmesser auch Klemmkeile eingesetzt werden, die vorzugsweise schräg zur Axialrichtung des Messerkopfs 20 in die Aufnahmeöffnungen 25.1, 25.2, 26.1, 26.2 eingeführt werden.

Die Stabmesser haben typischerweise einen Messerschaft mit einem rechteckigen oder prismatischen Querschnitt. Die Aufnahmeöffnungen 25.1, 25.2, 26.1, 26.2 der Stirnmesserköpfe 240 haben daher einen entsprechenden Querschnitt, der vorzugsweise komplementär ist. Die Messerschäfte können aber auch eine konkave oder konvexe Fläche aufweisen. In diesem Fall ist vorzugsweise auch die Form der Aufnahmeöffnungen 25.1, 25.2, 26.1, 26.2 entsprechend angepasst.

Bezugszeichenliste

| | |
|---|---|
| Kegelradritzel | 11 |
| Zahnlücken | 12 |
| Zähne | 13 |
| Planrad | 14 |
| Stabmesserkopf | 20 |
| Stabmesser | 21 |
| Stabmesser | 23 |
| Aufnahmeöffnung für Aussenmesser | 25.1 |
| Aufnahmeöffnung für Innenmesser | 25.2 |
| Aufnahmeöffnung für Aussenmesser | 26.1 |
| Aufnahmeöffnung für Innenmesser | 26.2 |
| Kopfbereich | 30 |
| Rückbereich | 32 |
| Zentralbohrung | 33 |
| Rückseite | 34 |

(fortgesetzt)

| | |
|---|---|
| CNC-Maschine | 100 |
| Spindeltrieb | 101 |
| Werkzeugspindelachse | 102 |
| erster Schlitten | 103 |
| Maschinenbett | 104 |
| Führung | 105 |
| Maschinenbett | 106 |
| Führung | 107 |
| zweiter Schlitten | 108 |
| Schwenkvorrichtung | 109 |
| Maschinengehäuse | 110 |
| Werkzeugspindel | 111 |
| Werkstückspindel | 112 |
| Werkstückspindelachse = Kegelradachse | 113 |
| Stirnmesserkopf | 240 |
| Innerer (erster) Nennkreis (Flugkreis) | 241 |
| Äußerer (zweiter) Nennkreis (Flugkreis) | 242 |
| 1. Teilungsdrehung | A |
| 2. Teilungsdrehung | B |
| 3. Teilungsdrehung | C |
| Parameter | c |
| Grundkreis | GK |
| Hypozykloide | HY |
| Messerkopfmittelpunkt = Rollkreismittelpunkt | M |
| Mittelpunkt des Grundkreises GK | MG |
| äußerer Teilkreisdurchmesser | $d_e$ |
| Teilkegelwinkel des Planrades | $\delta_p$ |
| Teilkegelwinkel des Kegelrades | $\delta$ |
| ganze Zahl | $G_G$ |
| maximale Gangzahl | $G_{1max}$, $G_{2max}$ |
| Gangzahl | $G_x$ |
| Winkel | $\lambda$ |
| Anzahl der Messergruppen des inneren Nennkreises | m1 |
| Anzahl der Messergruppen des äusseren Nennkreises | m2 |
| Modul | $m_p$ |
| Planradmitte | $M_P$ |
| Anzahl der Stabmesser pro Messergruppe | n1, n2 |
| Pfeil | P1 |
| Pfeil | P2 |
| Aussenradius | RA |
| Rollkreis | RK |
| äußere Teilkegellänge | $R_e$ |
| Grundkreisradius | RG |
| Rollkreisradius | RR |
| Planrad-Halbmesser | Rp |
| Innerer Messerkopfnennkreisradius des Nennkreises 241 | $r_{c1}$ |
| Innerer Messerkopfnennkreisradius des Nennkreises 242 | $r_{c2}$ |
| Planrad-Teilungswinkel | $\tau_p$ |
| Punkt | U |
| Zähnezahl | Z |
| Messergruppenzahl | $Z_0$ |

(fortgesetzt)

| Planradzähnezahl | $Z_p$ |
|---|---|
| Planradzähnezahl eines ersten Kegelrads | $z_{p1}$ |
| Planradzähnezahl eines zweiten Kegelrads | $z_{p2}$ |
| Zeiger | Z1, Z2, Z3 |

**Patentansprüche**

1. Stirnmesserkopfverfahren zur Herstellung verschiedener Kegelräder (11), deren jeweilige Flankenlängslinie durch eine Hypozykloide (HY) definiert ist, wobei folgende Schritte zum Herstellen eines ersten Kegelrads (11) ausgeführt werden:

   - Bestücken eines Universalstirnmesserkopfes (240) in einer ersten Konfiguration mit einer ersten Anzahl von Messergruppen, die einer ersten Gangzahl ($G_{1max}$) entspricht,
   - Herstellen des ersten Kegelrads (11) im kontinuierlichen Teilverfahren unter Einsatz des Universalstirnmesserkopfes (240) in der ersten Konfiguration;
   und wobei folgende Schritte zum Herstellen eines zweiten Kegelrads (11) ausgeführt werden:
   - Bestücken desselben Universalstirnmesserkopfes (240) in einer zweiten Konfiguration mit einer zweiten Anzahl von Messergruppen, die einer zweiten Gangzahl ($G_x$; $G_{2max}$) entspricht,
   - Herstellen des zweiten Kegelrads (11) im kontinuierlichen Teilverfahren unter Einsatz des Universalstirnmesserkopfes (240) in der zweiten Konfiguration.

2. Stirnmesserkopfverfahren nach Anspruch 1, **dadurch gekennzeichnet, dass** der Universalstirnmesserkopf (240) mindestens einen ersten festen Messerkopfnennradius ($r_{c1}$) und einen zweiten festen Messerkopfnennradius ($r_{c2}$) aufweist, wobei die erste Gangzahl ($G_{1max}$) die maximale Anzahl von Messergruppen festlegt, die beim Bestücken auf dem ersten Messerkopfnennradius ($r_{c1}$) angeordnet werden können, und wobei die zweite Gangzahl ($G_{2max}$) die Anzahl von Messergruppen festlegt, die beim Bestücken auf dem zweiten Messerkopfnennradius ($r_{c2}$) angeordnet werden können.

3. Stirnmesserkopfverfahren nach Anspruch 1, **dadurch gekennzeichnet, dass** der Universalstirnmesserkopf (240) nur einen ersten festen Messerkopfnennradius ($r_{c1}$) aufweist.

4. Stirnmesserkopfverfahren nach Anspruch 3, **dadurch gekennzeichnet, dass** die erste Gangzahl einer maximalen Gangzahl ($G_{1max}$) entspricht, die mindestens einmal teilbar ist durch eine ganze Zahl ($G_G$), die größer gleich Zwei ist, so dass

   - der Universalstirnmesserkopf (240) beim Bestücken der ersten Konfiguration mit einer maximalen Anzahl von Messergruppen, die der maximalen Gangzahl ($G_{1max}$) entspricht, bestückt wird,
   - der Universalstirnmesserkopf (240) beim Bestücken der zweiten Konfiguration mit der zweiten Anzahl von Messergruppen bestückt wird, die der zweiten Gangzahl ($G_x$) entspricht, wobei sich die zweite Gangzahl ($G_x$) aus einer Division der maximalen Gangzahl ($G_{1max}$) durch die ganze Zahl ($G_G$) ergibt.

5. Stirnmesserkopfverfahren nach einem der vorhergehenden Ansprüche, **dadurch gekennzeichnet, dass** eine fest übersetzte Kopplung zwischen dem Universalstirnmesserkopf (240) und dem Kegelrad (11) vorgegeben wird, damit sich an dem Kegelrad (11) eine hypozykloidische Flankenlängslinie, insbesondere eine geradlinige oder quasi-geradlinige Flankenlängslinie, ergibt.

6. Verwendung eines Stimmesserkopfs (240) zur Herstellung eines ersten Kegelrades (11) und eines zweiten Kegelrades (11) mit hypozykloidischer Flankenlängslinie, wobei der Stirnmesserkopf (240) stirnseitige Aufnahmeöffnungen (25.1 - 25.6) zur Aufnahme von einer maximalen Anzahl $G_{1max}$ von Stabmessern aufweist, die allesamt entlang eines ersten konzentrischen Messerkopfnennkreises mit einem ersten Messerkopfnennradius ($r_{c1}$) angeordnet sind, **dadurch gekennzeichnet, dass** die Anzahl $G_{1max}$ von Aufnahmeöffnungen (25.1 - 25.6) mindestens einmal teilbar ist durch eine ganze Zahl ($G_G$), die größer gleich Zwei ist, so dass, das erste Kegelrad (11) unter Einsatz einer Anzahl $G_{1max}$ von Stabmessern und das zweite Kegelrad (11) unter Einsatz einer Anzahl $G_x$ von Stabmessern im kontinuierlichen Teilverfahren gefräst wird,

- der Stirnmesserkopf (240) beim Bestücken in einer ersten Konfiguration mit einer maximalen Anzahl von Messergruppen, die der Anzahl $G_{1max}$, entspricht, bestückt wird,
- der Stirnmesserkopf (240) beim Bestücken in einer zweiten Konfiguration mit einer zweiten Anzahl von Messergruppen bestückt wird, die einer zweiten Gangzahl ($G_x$) entspricht, wobei sich die zweite Gangzahl ($G_x$) aus einer Division der Anzahl $G_{1max}$ durch die ganze Zahl ($G_G$) ergibt.

7. Verwendung nach Anspruch 6, **dadurch gekennzeichnet, dass** der Stirnmesserkopf (240) weitere stirnseitige Aufnahmeöffnungen (26.1 - 26.2) zur Aufnahme von einer weiteren maximalen Anzahl $G_{2max}$ von Stabmessern aufweist, die allesamt entlang eines zweiten konzentrischen Messerkopfnennkreises mit einem zweiten Messerkopfnennradius ($r_{c2}$) angeordnet sind, wobei der zweiten Messerkopfnennradius ($r_{c2}$) größer ist als der erste Messerkopfnennradius ($r_{c1}$).

**Claims**

1. Face mill cutter head method for the fabrication of different bevel gears (11), the respective longitudinal flank line of which is defined by a hypocycloid (HY), wherein the following steps are performed for fabricating a first bevel gear (11):

   - loading an all-purpose face mill cutter head (240) in a first configuration with a first number of cutter groups which corresponds to a first number of threads ($G_{1max}$),
   - fabricating the first bevel gear (11) in the continuous indexing process using the all-purpose face mill cutter head (240) in the first configuration;

   and wherein the following steps are performed for fabricating a second bevel gear (11):

   - loading the same all-purpose face mill cutter head (240) in a second configuration with a second number of cutter groups which corresponds to a second number of threads ($G_x$; $G_{1max}$),
   - fabricating the second bevel gear (11) in the continuous indexing process using the all-purpose face mill cutter head (240) in the second configuration.

2. Face mill cutter head method according to claim 1, **characterized in that** the all-purpose face mill cutter head (240) comprises at least a first fixed cutter head nominal radius ($r_{c1}$) and a second fixed cutter head nominal radius ($r_{c2}$), wherein the first number of threads ($G_{1max}$) defines the maximum number of cutter groups which can be arranged on the first cutter head nominal radius ($r_{c1}$) during the loading, and wherein the second number of threads ($G_{2max}$) defines the maximum number of cutter groups which can be arranged on the second cutter head nominal radius ($r_{c2}$) during the loading.

3. Face mill cutter head method according to claim 1, **characterized in that** the all-purpose face mill cutter head (240) comprises only a first fixed cutter head nominal radius ($r_{c1}$).

4. Face mill cutter head method according to claim 3, **characterized in that** the first number of threads corresponds to a maximum number of threads ($G_{1max}$) which is divisible at least once by an integer number ($G_G$) that is greater than or equal to two, so that

   - during the loading in the first configuration, the all-purpose face mill cutter head (240) is loaded with a maximum number of cutter groups which corresponds to the maximum number of threads ($G_{1max}$),
   - during the loading in the second configuration, the all-purpose face mill cutter head (240) is loaded with the second number of cutter groups which corresponds to the second number of threads ($G_x$), wherein the second number of threads ($G_x$) results from a division of the maximum number of threads ($G_{1max}$) by the integer number ($G_G$).

5. Face mill cutter head method according to any one of the preceding claims, **characterized in that** a fixed ratio coupling is provided between the all-purpose face mill cutter head (240) and the bevel gear (11), so that there results a hypocycloid longitudinal flank line, in particular a rectilineal or quasi-rectilineal longitudinal flank line, on the bevel gear (11).

6. Use of a face mill cutter head (240) for fabricating a first bevel gear (11) and a second bevel gear (11) comprising a hypocycloid longitudinal flank line, wherein the face mill cutter head (240) comprises face-sided reception openings (25.1 - 26.6) for the reception of a maximum number $G_{1max}$ of bar-cutters, which are all arranged on a first concentric cutter head nominal radius ($r_{c1}$), **characterized in that** the number $G_{1max}$ of bar-cutters is divisible at least once by an integer number ($G_G$) that is greater than or equal to two, so that the first bevel gear (11) is milled using a number $G_{1max}$ of bar-cutters and the second bevel gear (11) is milled using a number $G_x$ of bar-cutters in the continuous indexing process,

- during the loading in the first configuration, the face mill cutter head (240) is loaded with a maximum number of cutter groups, which corresponds to the number $G_{1max}$ ,
- during the loading in the second configuration, the face mill cutter head (240) is loaded with a second number of cutter groups which corresponds to a second number of threads ($G_x$), wherein the second number of threads ($G_x$) results from a division of the number $G_{1max}$ by the integer number ($G_G$).

**7.** Use according to claim 6, **characterized in that** the face mill cutter head (240) comprises further face-sided reception openings (26.1 - 26.6) for the reception of a further maximum number $G_{2max}$ of bar-cutters which are all arranged along a second concentric cutter head nominal circle having a second cutter head nominal radius ($r_{c2}$), wherein the second cutter head nominal radius ($r_{c2}$) is greater than the first cutter head nominal radius ($r_{c1}$).

**Revendications**

**1.** Procédé à tête de mesure frontale pour fabriquer des roues coniques (11) différentes, la ligne le long le flanc respective desquelles est définie par une hypocycloïde (HY), dans lequel les étapes suivantes sont exécutées pour fabriquer une première roue conique (11):

- chargement d'une tête de mesure frontale tous usages (240) dans une première configuration avec un premier nombre des groupes des lames qui correspond à un premier nombre des spires ($G_{1max}$),
- fabrication de la première roue conique (11) dans le procédé d'indexation continu en utilisant la tête de mesure frontale tous usages (240) dans la première configuration ;

et cependant les étapes suivantes sont exécutées pour fabriquer une seconde roue conique (11) :

- chargement de la même tête de mesure frontale tous usages (240) dans une seconde configuration avec un second nombre des groupes des lames qui correspond à un second nombre des spires ($G_x$) ; $G_{2max}$),
- fabrication de la seconde roue conique (11) dans le procédé d'indexation continu en utilisant la tête de mesure frontale tous usages (240) dans la seconde configuration.

**2.** Procédé à tête de mesure frontale selon la revendication 1, **caractérisé en ce que** la tête de mesure frontale tous usages (240) a au moins un premier radius ($r_{c1}$) nominal fixe de la tête de mesure et un second radius ($r_{c2}$) nominal fixe de la tête de mesure, dans lequel le premier nombre des spires ($G_{1max}$) définit le nombre maximum des groupes des lames qui peuvent être arrangées sur le premier radius ($r_{c1}$) nominal de la tête de mesure pendant le chargement, et dans lequel le second nombre des spires ($G_{2max}$) définit le nombre maximum des groupes des lames qui peuvent être arrangées sur le second radius ($r_{c2}$) nominal de la tête de mesure pendant le chargement.

**3.** Procédé à tête de mesure frontale selon la revendication 1, **caractérisé en ce que** la tête de mesure frontale tous usages (240) ne comprend qu'un premier radius ($r_{c1}$) nominal fixe de la tête de mesure.

**4.** Procédé à tête de mesure frontale selon la revendication 3, **caractérisé en ce que** le premier nombre des spires correspond à un nombre maximum ($G_{1max}$) des spires qui est divisible par un nombre entier ($G_G$) plus grand que ou égal à deux, afin que

- la tête de mesure frontale tous usages (240) est chargée avec un nombre maximum des groupes des lames qui correspond au nombre maximum ($G_{1max}$) des spires pendant le chargement dans la première configuration,
- la tête de mesure frontale tous usages (240) est chargée avec le deuxième nombre des groupes des lames qui correspond au deuxième nombre ($G_x$) des spires pendant le chargement dans la seconde configuration, cependant le deuxième nombre ($G_x$) des spires résulte d'une division du nombre maximum ($G_{1max}$) des spires par le nombre entier ($G_G$).

**5.** Procédé à tête de mesure frontale selon quelques-unes des revendications précédentes, **caractérisé en ce qu'**un accouplement adapté fixe est prédéfini entre la tête de mesure frontale tous usages (240) et la roue conique (11) afin qu'il résulte une ligne le long de flanc hypocycloïde, notamment une ligne le long de flanc rectiligne ou quasi-rectiligne.

**6.** Utilisation d'une tête de mesure frontale (240) pour fabriquer une première roue conique (11) et une seconde roue conique (11) comprenant une ligne le long de flanc hypocycloïde, dans laquelle la tête de mesure frontale (240) comprend des apertures de réception frontaux (25.1 - 25.6) pour la réception d'un nombre maximum $G_{1max}$ des barres à lame qui sont toutes arrangées le long d'un premier cercle concentrique nominale des barres à lame ayant un premier radius nominale ($r_1$) des barres à lame, **caractérisée en ce que** le nombre $G_{1max}$ des apertures de réception (25.1 - 25.6) est divisible au moins une fois par un nombre entier ($G_G$) qui est plus grand que ou égal à deux, afin que la première roue conique (11) est fraisée en utilisant un nombre $G_{1max}$ des barres à lame et la seconde roue conique (11) est fraisée en utilisant un nombre $G_x$ des barres à lame dans le procédé d'indexation continu,

    - pendant le chargement dans une première configuration, la tête de mesure frontale (240) est chargée avec un nombre maximum des groupes des lames qui correspond au nombre $G_{1max}$,
    - pendant le chargement dans une seconde configuration, la tête de mesure frontale (240) est chargée avec un deuxième nombre des groupes des lames qui correspond à un deuxième nombre ($G_x$) des spires, cependant le deuxième nombre ($G_x$) des spires résulte d'une division du nombre $G_{1max}$ par le nombre entier ($G_G$).

**7.** Utilisation selon la revendication 6, **caractérisée en ce que** la tête de mesure frontale (240) comprend des apertures de réception frontaux ultérieures (26.1 - 26.6) pour la réception d'un nombre $G_{2max}$ maximum ultérieur des barres à lame qui sont toutes arrangées le long d'un deuxième cercle concentrique nominale des barres à lame ayant un deuxième radius ($r_{c2}$) nominale des barres à lame, cependant le deuxième radius ($r_{c2}$) nominale des barres à lame est plus grand que le premier radius ($r_{c1}$) nominale des barres à lame.

**Fig. 1A**

**Fig. 1B**

**Fig. 1C**

**Fig. 2**

Fig. 3A

Fig. 3B

Fig. 3C

Fig. 3D

Fig. 3E

Fig. 3F

Fig. 3G

Fig. 3H

**Fig. 4A**

**Fig. 4B**

**Fig. 5**

**Fig. 6**

**Fig. 7**

**Fig. 8A**

n1 = 2
n2 = 2
$G_{1max}$ = 13
$G_{2max}$ = 15

34    102    31.2    240

32

30

31.4    31.1
31.3

RA

**Fig. 8B**

31.2    31.1    31.4    240

34    31.3

33

**Fig. 8C**

**Fig. 9A**

$n1 = 2$
$G_{1max} = 20$

**Fig. 9B**

**Fig. 9C**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 08167925 A

- EP 1348509 A2

**In der Beschreibung aufgeführte Nicht-Patentliteratur**

- **Izdanie 2-e ; V. N. Kedrinskij ; K. M. Pismanik ; Izdatelstvo.** Stanki dja obrabotki konitscheskich zubtschatych kolos. *Maschinostroenie,* 1967, 506-508

- **Jan Klingelnberg.** Kegelräder; Grundlagen, Anwendungen. Springer Verlag, 2008